# EUROPEAN PATENT SPECIFICATION

(11) **EP 2 956 752 B1**
(45) Date of publication and mention of the grant of the patent: **14.11.2018**
(21) Application number: 13773428.1
(22) Date of filing: 18.03.2013
(51) Int. Cl.: G01M 5/00

(54) **METHOD FOR MONITORING A STRUCTURE AND MONITORING DEVICE FOR THE STRUCTURE**
VERFAHREN ZUR ÜBERWACHUNG EINER STRUKTUR UND VORRICHTUNG ZUR ÜBERWACHUNG DER STRUKTUR
PROCÉDÉ POUR CONTRÔLER UNE STRUCTURE ET DISPOSITIF DE CONTRÔLE POUR LA STRUCTURE

(43) Date of publication of application: 23.12.2015
(73) Proprietor: Siemens Aktiengesellschaft, 80333 München (DE)
(72) Inventor: KOZIONOV, Alexey Pietrovich, Pskov 180005 (RU); MOKHOV, Ilya Igorevich, St.Petersburg 192281 (RU); PYAYT, Alexander Leonidovich, St.Petersburg 198207 (RU); SHEVCHENKO, Denis Vladimirovich, St.Petersburg 195269 (RU)
(74) Representative: Isarpatent
(86) International application number: PCT/RU2013/000210
(87) International publication number: WO 2014/148934

(56) References cited:
- WO-A2-2011/070343

## Description

The invention relates to a method for monitoring a structure isolating a first medium from a second medium. The first medium exerts higher pressure on the structure than the second medium. By means of at least one sensor, at least one physical variable relating to this structure is acquired. This variable is communicated to a computing device in the form of a signal, wherein the computing device detects a deviation of an actual state of the structure from a target state of the structure based on the signal of the sensor. If a value of the deviation is greater than a preset threshold value, it is determined by means of the computing device if a critical state of the structure is present, which gives reason to expect the occurrence of damages. Furthermore, the invention relates to a monitoring device for a structure, by which a first medium is isolated from a second medium. For example, the structure is a dam or a dike.

Presently usual methods for monitoring such structures can be divided into three categories. The first category includes visual inspection, in which the structure to be examined is reviewed and checked for damages by trained personnel. However, in case of visual review of the structure, the risk of identifying an imminent damage too late is high, since the visual inspection is not a continuous monitoring but a rare event compared to the permanent sensory monitoring. Furthermore, there is the risk that in visual review of the structure, already existing or shortly imminent damages will not be recognized or even missed.

Within the scope of the second category the monitoring is effected by means of a model, which reproduces the physical conditions of the structure to be monitored. A corresponding example is described in the article "Pyayt, A.L. et al; Artificial Intelligence and Finite Element Modelling for Monitoring Flood Defence Structures". On the one hand, it is common to use simple physical relations for the construction of a physical model for evaluating the state of the structure. On the other hand, the structure can be emulated by means of expensive multi-dimensional models. These multi-dimensional models are mostly based on the so-called finite element method (FEM), by means of which deformations, forces and mechanical stresses on or in the structure can be determined.

A physical model is based on information about the construction, the physical environmental conditions, to which the structure is subject or which apply to the structure, as well as geometric data. Furthermore, information about physical characteristics of the material relating to the structure, in particular the soil, have to be obtained, which is associated with additional expenditure. For the modeling itself, hours or even days are required. A similar time horizon can be estimated for the computation of the structure's state by means of the model, wherefore considerable delay of diagnosis relating to the structure in the form of computational results has to be taken into account. An example hereto is specified in the article "Krzhizhanovskaya, V.V. eat al; Flood early warning system: design, implementation and computational modules". In this publication, data expensively generated of a virtual emulation of a dam is supplied to a flooding simulation. Due to the extremely great operational effort of this virtual dam associated therewith, the operation by experts is required.

Parallel to this complex simulation, it is roughly estimated if a risk for the dam is present by a system of artificial intelligence, and by erosion simulation, it is approximately computed how long a possible flood caused by the erosion lasts and which amounts of water escape by the erosion.

The third category involves reading out data of a network of sensors attached to the structure for monitoring. If a sufficiently close-meshed network of sensors is used for monitoring, thus, different physical variables can be determined with high resolution. On the one hand, it is common to use glass fiber cables for measuring temperatures and on the other hand pressure sensors for measuring the pore pressure in the structure. The employment of a network of glass fiber cables allows e.g. detecting an event of damage, in which water flows through the structure, thus e.g. a dam break. Thus, at the location of flowing through medium, an abnormal value for the temperature is determined by a glass fiber cable directly flown by the medium or at least wetted by seeping of the medium.

The employment of a pronounced network of sensors is the more expensive, the more close-meshed the sensors are placed, wherein in addition the risk of false measurement or of false interpretations of the measurements exists. The event of damage of the dam break can be detected by the temperature measurements by means of the glass fiber cables. However, the condition for damage identification is a measurable temperature difference between structure and temperature of the flowing through medium. These temperature differences are distinct especially in particularly warm or particularly cold seasons and thus especially well measurable also in summer and in winter. In seasons with moderate temperatures such as in spring or autumn, the temperatures of the structure and of the passing medium often have too low temperature differences that a medium passage can be detected by means of the temperature measurement by glass fiber cables.

By the employment of a network of pressure sensors, irregularities of the pore pressure of the structure can be determined independently of the season, but this sensor network usually has a lower spatial resolution. This entails the risk that occurring or already existing damages are not recognized.

In the published patent prior art WO 2011/070343 A2 discloses a method and a device for monitoring a structure (a conduit) isolating a first medium from a second medium, wherein the first medium exerts a higher pressure on the structure than the second medium (a conduit carrying fluid under pressure), in which at least one sensor acquires at least one physical variable relating to this structure and in which the at least one sensor communicates a signal to a computing device, wherein the computing device detects a deviation of an actual state of the structure from a target state of the structure based on the signal of the at least one sensor, wherein, if a value of the deviation is greater than a preset threshold value, it is determined by means of the computing device if a critical state of the structure exists (the detection and location of fluid leaks), which gives reason to expect the occurrence of damages, where data is communicated from a second component (a stage) of the computing device to a first component of the computing device (another stage), which is used for evaluating the state of the structure.

Therefore, it is the object of the present invention to provide a particularly effective and at the same time particularly reliable method of the initially mentioned kind.

This object is solved by a method having the features of claim 1 and by a monitoring device having the features of claim 8. Advantageous configurations with convenient developments of the invention are specified in the dependent claims. Hereinafter, before coming to a detailled discussion of the embodiments of the invention, first some general aspects of the invention are discussed as an introduction to the invention described with more details below.

In the method according to an aspect of the invention, by means of a first component of the computing device, data used for evaluating the state of the structure is communicated to a second component of the computing device.

In safety-relevant systems, redundant systems are considerably advantageous for the failure safety of the entire system. By the data transfer to the first component it is ensured that all of the important computational results of the second component are further available even if the second component fails. Furthermore, by the use of two different components, a system validation can be effected based on the communicated data. The first component can further be trained with data. In addition, discrepancies based on different computation methods of the two components can be corrected.

By a combination of data describing the structure, measured by means of the at least one sensor and computed by the computing device, one gets along with a very low number of sensors for monitoring the structure. An expensive network of sensors known from the prior art can therefore be omitted. Thereby, cost advantages arise in the sensor application, maintenance and start-up. In addition, the suitable selection of the preset threshold value allows particularly simply differentiating the critical state of the structure from a non-critical one. By the step of computation if a critical state is present, visual inspection and maintenance of the structure can thus be omitted, and it can be specifically responded to this critical state. The computing device is therefore specifically triggered to perform a computation in order to determine if the critical state is present, if the signal of the at least one sensor gives rise to such a computation.

Moreover, the employed sensors can not only be employed for validation of the data of the computing device, but also for improving the data quality. By the comparison of the real measurement data of the at least one sensor to virtual data generated by the computing device, it can be ensured that the virtual data sufficiently accurately correspond to the real conditions.

In an advantageous configuration of according to another aspect of the invention, the first component of the computing device generates a first dataset indicating the deviation faster than the second component generates a second dataset evaluating the state of the structure and thus indicating a risk for the structure.

The first dataset generated by the output of the faster component allows based on the preset threshold value fast detecting a deviation from this threshold value. The indication of a possible risk for the structure is associated therewith. The second component now allows evaluating the actual risk for the structure, locating possible damages and interpreting and specifying the damage. The second component is slower than the first one, but in return particularly accurate and reliable.

It has proven further advantageous according to another aspect of the invention if in case of deceeding the preset threshold value, the computing device classifies the actual state as a normal state of the structure. To this, the second component determines a further dataset supplied to the first component for extending its stock of datasets, which describe normal states of the structure. The stock of datasets of the first component is therefore continuously increased.

Thus, it is sufficient to specify the magnitude of the threshold value independently of whether this magnitude of the threshold value is exceeded or deceeded in the normal state. Exact evaluation of the state is effected by the second component. Even upon considerably deceeding the magnitude of the threshold value, a normal state is determined by the second component, by the associated dataset of which the datasets of the first component are again extended.

It is further advantageous according to another aspect of the invention if in case of exceeding the preset threshold value by a first amount, the actual state is first classified as an abnormal state by the first component.

Subsequently, this actual state is evaluated as a normal state by the second component. Then, a dataset describing this actual state is supplied to the first component. Thus, a stock of datasets of the first component describing the normal states is again extended.

Herein, the evaluation performed by the second component is crucial for the classification of the present actual state in a critical state or a normal state according to another aspect of the invention. Since the datasets of the second component allow particularly exact classification of the state, the datasets of the second component is attributed a higher weighting than the datasets of the first component within the computing device. Thus, if a present actual state is classified as an abnormal state by the first component, but is classified as a normal state by the second component by exact evaluation of the state, thus, thereupon, the first component is overruled and the first component is sensitized to this newly declared normal state.

The data stock of the first component is according to another aspect of the invention therefore extended by a further dataset, which indicates a tolerable state. Future states, the associated actual values of which are below the threshold value, can then be particularly fast and reliably classified or declared as a normal state by the first component of the computing device.

It has proven further advantageous according to another aspect of the invention if in case of exceeding the preset threshold value by a second amount, the actual state is classified as an abnormal state by the first component, wherein this actual state is evaluated as one of the critical states by the second component.

The datasets of the faster first component of the computing device are continuously extended by the datasets describing the state, which are provided by the second component, in connection with an evaluation of the actual states. This results in the fact that the computing device can perform a particularly fast evaluation of the state. Evaluation by the second component is only effected if an actual state is present, which is not yet known to the first component. However, if herein an actual state is present, which is classified as a critical state, thus, evaluation by the second component is always effected.

Furthermore, it is particularly advantageous according to another aspect of the invention if a warning message is output if the second component evaluates the actual state as a critical state. By outputting the warning message, it is particularly largely ensured that a critical state endangering the structure is not missed.

It has proven further advantageous according to another aspect of the invention if the critical state identified by the second component is associated with at least one type of damage of the structure. A dataset describing the type of damage is then supplied to the first component.

By the communication of data for evaluation and additionally of data for classification of the type of damage to the first component, the first component is enabled to autonomously make evaluations of the states without having to resort to the more expensive evaluation methods of the second component. The more data is communicated for evaluating and classifying types of damages to the first component, the better the quality of the risk evaluation already by the first component is. Since the damage evaluation by the first component is particularly fast effected, the computing device becomes faster in its evaluation of the states with increasing stock of datasets.

It is further advantageous according to another aspect of the invention if the first component determines probabilities for the occurrence of the at least one type of damage and outputs a corresponding warning message. The output of probabilities for the occurrence of damages allows adapting the effort for countermeasures corresponding to the probabilities. Thus, for example, with a low probability of a damage, a simple visual inspection of the structure is performed. With high probability of a damage, for example, measures of repair of the structure or even evacuation are initiated at once.

It is particularly advantageous if according to another aspect of the invention a system of artificial intelligence is employed as the first component of the computing device, and a system for determining deformations and/or forces and/or mechanical stresses of the structure is employed as the second component.

Systems of artificial intelligence can interpret and represent linear and non-linear relations. These relations are derived from the datasets communicated by the second component by the system of artificial intelligence. The datasets of the second component determined based on complex physical relations can be particularly fast reproduced by the system of artificial intelligence, whereby a particularly fast response to a critical state can be effected.

Furthermore, it is advantageous if according to another aspect of the invention further datasets relating to the state of the structure are supplied to the computing device via an interface. By the interface, it is e.g. allowed to the operating personnel to manually preset data and designate states or damages of the structure e.g. within the scope of introduction of a nomenclature. Thereby, the classification in categories of damage and the associated datasets thereof is also possible. If the structure is a dam, e.g. a breach, erosion or yielding (piping, slipping) belongs to these damages.

Thus, e.g. upon slipping-off of soil, a sensor previously installed in the dam, can be exposed and correspondingly cause intense variations of the data. In this case, the computing device can be notified via the interface that with such varying values, a sensor is exposed, which e.g. indicates the event of damage of slipping-off of soil.

A further event, which can be countered by the presence of the interface is a failure of a sensor and associated therewith the occurrence of error signals. Often, sensors output a certain extreme value if they are defect. This value could not be achieved under real conditions. In this case too, it is reasonable to communicate datasets describing such scenarios to the computing device via the interface.

The monitoring device according to according to another aspect of the invention serves for monitoring a structure, by which a first medium can be isolated from a second medium. By means of the first medium, a higher pressure can be exerted on the structure than by means of the second medium. The monitoring device has at least one sensor, by means of which at least one physical variable relating to this structure can be acquired. By means of the sensor, a signal can be communicated to a computing device. By the computing device, a deviation of an actual state of the structure from a target state of the structure is detectable based on the signal of the sensor. Depending on a value of the deviation related to a presettable threshold value, a critical state of the structure can be determined by means of the computing device, which gives reason to expect the occurrence of damages. A first component of the computing device is coupled to a second component of the computing device via a communication link adapted for transmitting data. The first component is adapted to perform evaluation of the state of the structure based on the data.

By the employment of the monitoring device, maintenance cost arising as a result of visual examination of the structure can be reduced to a minimum. Namely, inspection only has to be effected in case of presence of the critical state. By means of the monitoring device, thus, particularly effective and at the same time particularly reliable monitoring of the structure is allowed.

The advantages and preferred embodiments described for the method according to the invention also apply to the structure according to the invention and vice versa.

The features and feature combinations mentioned above in the description as well as the features and feature combinations mentioned below in the description of figures and/or shown in the figure alone are usable not only in the respectively specified combination, but also in other combinations or alone without departing from the scope of the invention. Further advantages, features and details of the invention are apparent from the claims, the following description of preferred embodiments as well as based on the drawings. The drawings show in:
FIG. 1 a structure configured as a dam and equipped with sensors according to the prior art and separating the medium air from the medium water.
FIG. 2 the computing sequences executed by a computing device, if environmental conditions and sensor data relating to the dam are present as input variables.
FIG. 3 a model validation employing a validation component as well as the sensor data.
FIG. 4 the generation of a risk evaluation and of a dataset, wherein the environmental conditions as well as the sensor data are used as the input variables.
FIG. 5 the process of extending a dataset of artificial intelligence by supplying components of a dataset of a finite element model.
FIG. 6 the improvement of the statement quality of artificial intelligence by supplementation of a computing device with an interface.

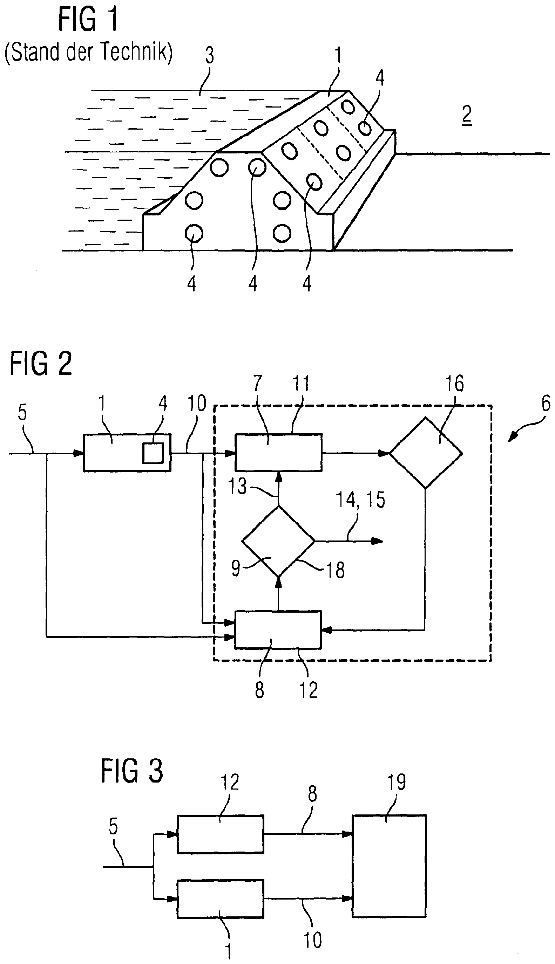

FIG. 1 shows a structure configured as a dam 1 and separating the medium air 2 from the medium water 3. The dam 1 is equipped with sensors 4, by means of which physical data such as temperatures and pore pressures can be determined. The air 2 and the water 3 exert different pressures on the dam 1 and are located on different sides thereof. The sensors 4 serve for monitoring the dam 1 for damages known from the prior art. To this, a close-meshed, expensive network of sensors 4 is provided.

In contrast, FIG. 2 exemplifies computing sequences executed by a computing device 6, which monitors the dam 1 in another manner. Therein, data values specifying environmental conditions 5 and sensor data 10 in the form of Signals are present as input variables. This sensor data 10 is provided by sensors 4 installed in the dam 1.

The computing device 6 divides into a first component containing artificial intelligence 11 and a second component containing a finite element model 12. The artificial intelligence 11 has a first dataset 7 and the finite element model 12 has a second dataset 8.

The environmental conditions 5, to which also the media acting on the dam 1 belong, enter the second dataset 8 of the finite element model 12. By effect o£ the environmental conditions 5 on the dam 1, the sensor data 10 corresponding to the environmental conditions 5 is generated. The sensor data 10 is both input variables for the artificial intelligence 11 and for the finite element model 12.

If an abnormal state 16 is detected by the artificial intelligence 11 upon comparison of the sensor data 10 to the first data set 7, thus, a computation is triggered. Therein, a Simulation based on the present input variables is performed by the finite element model 12.

In Order to determine if the present actual state is an abnormal state 16, it is checked by the artificial intelligence 11 if exceeding a threshold value is present. The artificial intelligence 11 already has a certain stock of datasets 7, which are associated with normal states 13 of the dam 1. If there is a deviation from the existing datasets 7 in a dataset specifying an actual state of the dam 1, which is greater according to amount than the threshold value, thus, this actual state is first classified as an abnormal state 16. The dataset describing the actual state is determined from the sensor data 10.

If the present actual state is identified as an abnormal state 16, thus, simulation is consequently performed by the finite element model 12. As a result, the second dataset 8 is generated, which includes virtual sensor data. At least a part of the data of the second dataset 8 is communicated to state evaluation 18, which performs a risk evaluation 9.

By means of the risk evaluation 9, the present actual state, which previously was declared as an abnormal state by the artificial intelligence 11, is classified either as a critical state 14 or as a normal state 13. If classification in the critical state 14 is effected, thus, a warning message 15 is output by a state evaluation 18.

If classification as a normal state 13 is effected, thus, the datasets corresponding to this normal state 13 are supplied to the stock of datasets 7 of the artificial intelligence 11. The stock of datasets 7 of the artificial intelligence 11 is therefore extended by the dataset corresponding to this normal state 13.

Based on FIG. 3, a model validation based on a validation component 19 using the sensor data 10 is to be illustrated. The validation component 19 is a constituent of the computing device 6. Both for the finite element model 12 and for the sensor data 10 relating to the dam 1, the datasets associated with the environmental conditions 5 present input variables. While corresponding sensor data 10 is generated on the dam 1 as a result of the environmental conditions 5, which corresponds to real data, the second dataset 8 is generated by the finite element model 12, which contains virtual sensor data. Therein, the number of the sensor data 10 relating to the dam 1 can be considerably smaller than the number of the virtual sensor data of the second dataset 8.

The finite element model 12 has the object to simulate the actual states, thus the real states of the dam 1, as exactly as possible. Since the finite element model 12 is a geometrically similar emulation of the geometry of the real dam 1 within the scope of accuracy capable of being modeled, the sensor data 10 is compared to that virtual sensor data of the second dataset 8 for the purpose of validation, which is at geometrically similar location as the sensors 4 in the dam 1. By the direct comparison of the virtual sensors of the second dataset 8 to the real sensor data 10, it is checked within the validation component 19 if the virtual sensor data of the second dataset 8 corresponds to the sensor data 10 of the dam 1 with sufficient accuracy.

If this is the case, thus, it is assumed that all of the remaining virtual sensor data also sufficiently accurately reproduces the real conditions. This is also assumed if direct comparison to the real sensor data 10 is not possible for this virtual sensor data because there is no sensor 4 for direct comparison placed at the geometrically similar location in the dam 1.

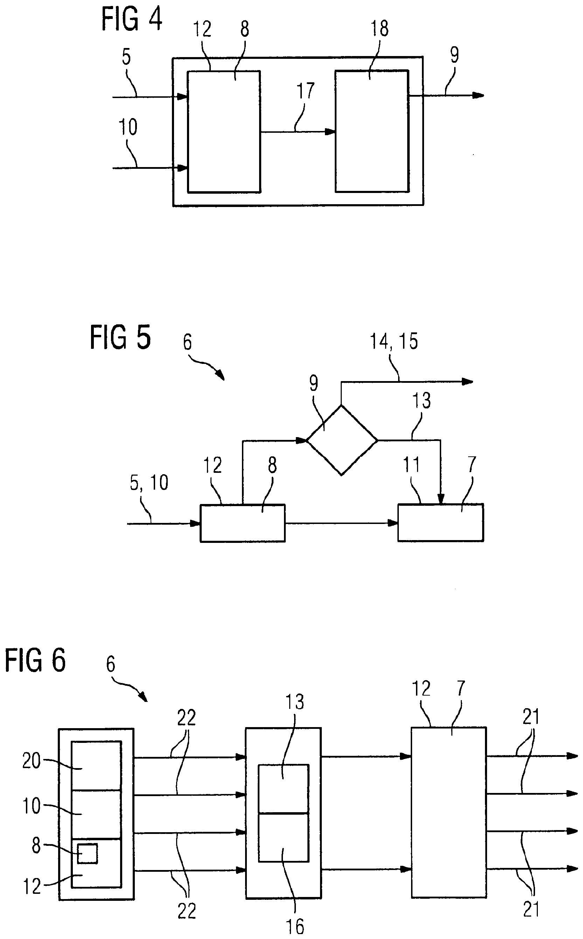

The generation of a dataset associated with the risk evaluation 9 is described with reference to FIG. 4. The risk evaluation 9 is a constituent o£ the computing device 6. The datasets respectively corresponding to the environmental conditions 5 and the sensor data 10 enter the finite element model 12. The dataset of a dam state 17 is determined by the finite element model 12 and contains at least a part of the second dataset 8 of the finite element model 12. The dataset of the dam state 17 is communicated to the state evaluation 18, wherein the state evaluation 18 Outputs a dataset associated with the risk evaluation 9 and at least a part of the second dataset 8, which contains the virtual sensor data

Based on FIG. 5, with extending the first dataset 7 of the artificial intelligence 11 by datasets describing a normal state 13, a further constituent of the computing device 6 is clarified. In addition, a part of the second dataset 8 of the finite element model 12 is supplied to the validation component 19.

The datasets associated with the environmental conditions 5 as well as the datasets of the sensor data 10 serve as input variables for the finite element model 12. The finite element model 12 generates the second dataset 8 based on these input variables, which is at least partially supplied to the risk evaluation 9. The risk evaluation 9 evaluates if the communicated part of the present dataset 8 is associated with one of the normal states 13 or one of the critical states 14. If the actual state is declared as a normal state 13, thus, the data associated with the normal state 13 is supplied to the dataset 7 o£ the artificial intelligence 11. In contrast, if the actual state is evaluated as the critical state 14 by the risk evaluation 9, thus, this dataset associated with the critical state is not supplied to the dataset 7 o£ the artificial intelligence 11. Rather, the warning message 15 is output. The communication o£ data from the finite element model 12 to the artificial intelligence 11 is effected via a communication link, which presently is formed as a data line 23. This data line 23 is used for training the artificial intelligence 11 with a part of the second dataset 8 of the finite element model 12.

Based on FIG. 6, an interface 20 extending the computing device 6 is illustrated. By coupling the interface 20 to the datasets associated with the sensor data 10 as well as to the datasets 8 of the finite element model 12, different state data 22 can be divided in classes, which include both datasets of different types of damages and datasets of normal states.

In a further step, these datasets are divided in datasets describing normal states 13 as well as datasets describing abnormal states 16 and supplied to the first dataset 7 of the artificial intelligence 12. Thus, the first dataset 7 is extended by datasets describing the abnormal state 16.

As a result, the artificial intelligence 12 is allowed to output probabilities 21 for the occurrence of various states. The probabilities 21 can e.g. be a probability of breach, piping or slippage failure. Operating personnel can e.g. manually input data via the interface 20, which describes states or such damages of the structure.

### List of reference characters

- 1: dam
- 2: air
- 3: water
- 4: sensor
- 5: environmental conditions
- 6: computing de vice
- 7: first dataset
- 8: second dataset
- 9: risk evaluation
- 10: sensor data
- 11: artificial intelligence
- 12: finite element model
- 13: normal state
- 14: critical state
- 15: warning message
- 16: abnormal state
- 17: dam state
- 18: state evaluation
- 19: validation component
- 20: interface
- 21: probability
- 22: state data
- 23: data line

## Claims

1. Method for monitoring a structure (1) isolating a first medium (2) from a second medium (3), wherein
the first medium (2) exerts a higher pressure on the structure (1) than the second medium (3),
in which at least one sensor (4) acquires at least one physical variable relating to this structure (1) and depending from environmental conditions (5) generates sensor data (10) and
in which the at least one sensor (4) communicates the sensor data (10) to a computing device (6), wherein the computing device (6) comprises a first component (11) receiving the sensor data (10) and having first data sets (7) indicating a normal state of the structure (1) and a second component (12) receiving the environmental conditions (5) and the the sensor data (10) and having a second data set (8),
wherein the first component (11) of the computing device (6) detects a deviation of an actual state of the structure (1) from a target state of the structure (1) based on the sensor data (10) of the at least one sensor (4) by comparing the sensor data (10) with the first data sets (7),
wherein, if a value of the deviation is greater than a preset threshold value, the present actual state described by a data set determined by the sensor data (10) is determined to be an abnormal state (16) and it is determined (9) by means of the computing device (6) if a critical state (14) of the structure (1) exists, which gives reason to expect the occurrence of damages, wherein
if the abnormal state (16) is determined, for determining if a critical state (14) exists, the second component (12) generates the second data set (8) including virtual sensor data on the basis of a simulation and supplies at least part of the second data set (8) to a risk evaluation unit (9) which performs a risk evaluation, wherein
if the risk evaluation unit (9) classifies the actual state previously determined as an abnormal state (16) by the first component (11) as a critical state (14), it outputs a warning message (15); and
if the risk evaluation unit (9) classifies the actual state previously determined as an abnormal state (16) by the first component (11) as a normal state (13), the stock of first data sets (7) of the first component (11) is extended by the data set corresponding to this normal state (13).

2. Method according to claim 1, **characterized in that** in case of exceeding the preset threshold value by a first amount, the actual state is first classified as an abnormal state (16) by the first component (11), wherein this actual state is evaluated as a normal state (13) by the second component (12), and then a dataset describing this actual state is supplied to the first component (11) for extending a stock of datasets describing the normal states (13).

3. Method according to any one of claims 1 to 2, **characterized in that** in case of exceeding the preset threshold value by a second amount, the actual state is classified as an abnormal state (16) by the first component, wherein this actual state is evaluated as a critical state (14) by the second component (12).

4. Method according to any one of claims 1 to 5, **characterized in that** the critical state (14) identified by the second component (12) is associated with at least one type of damage of the structure (1) and a dataset describing the at least one type of damage is supplied to the first component (11).

5. Method according to claim 4, **characterized in that** the first component (11) determines probabilities (21) for the occurrence of the at least one type of damage and outputs a corresponding warning message (15).

6. Method according to any one of claims 1 to 7, **characterized in that** a system of artificial intelligence is employed as the first component (11) and a system for determining deformations and/or forces and/or mechanical stresses of the structure (1) is employed as the second component (12).

7. Method according to any one of claims 1 to 6, **characterized in that** further datasets (22) relating to the state of the structure (1) are supplied to the computing device (6) via an interface (20).

8. Monitoring device for a structure (1), by which a first medium (2) can be isolated from a second medium (3), wherein by means of the first medium (2) a higher pressure is exerted on the structure (1) than by means of the second medium (3), including
at least one sensor (4), by which at least one physical variable relating to this structure (1) and depending from environmental conditions is acquired, the sensor (4) generating sensor data (10) communicated to a computing device (6), wherein the computing device (6) comprises a first component (11) receiving the sensor data (10) and having first data sets (7) indicating a normal state of the structure (1) and a second component (12) receiving the environmetal conditions (5) and the the sensor data (10) and having a second data set (8),
wherein the first component (11) of the computing device (6) detects a deviation of an actual state of the structure (1) from a target state of the structure (1) based on the sensor data (10) of the at least one sensor (4) by comparing the sensor data (10) with the first data sets (7),
wherein if a value of the deviation is greater than a presettable threshold value, the present actual state described by a data set determined by the sensor data (10) is determined to be an abnormal state (16) and it is determined (9) by means of the computing device (6) if a critical state (14) of the structure (1) exisits, which gives reason to expect the occurrence of damages, wherein
the first component (11) of the computing device (6) is coupled to the second component (12) of the computing device (6) via a communication link adapted for transmitting data,
if the abnormal state (16) is determined by the first component (11), for determining if a critical state (14) exists, the second component (12) generates the second data set (8) including virtual sensor data on the basis of a simulation and supplies at least part of the second data set (8) to a risk evaluation unit (9) which performs a risk evaluation, wherein
if the risk evaluation unit (9) classifies the actual state previously determined as an abnormal state (16) by the first component (11) as a critical state (14), it outputs a warning message (15); and
if the risk evaluation unit (9) classifies the actual state previously determined as an abnormal state (16) by the first component (11) as a normal state (13), the stock of first data sets (7) of the first component (11) is extended by the data set corresponding to this normal state (13).

## Patentansprüche

1. Verfahren zur Überwachung einer Struktur (1), die ein erstes Medium (2) von einem zweiten Medium (3) isoliert, wobei das erste Medium (2) einen größeren Druck auf die Struktur (1) ausübt als das zweite Medium (3),
wobei wenigstens ein Sensor (4) wenigstens eine physikalische Variable erfasst, die diese Struktur (1) betrifft und von Umgebungsbedingungen (5) abhängt, und Sensordaten (10) erzeugt und
wobei der wenigstens eine Sensor (4) die Sensordaten (10) an eine Datenverarbeitungsvorrichtung (6) übermittelt, wobei die Datenverarbeitungsvorrichtung (6) eine erste Komponente (11), die die Sensordaten (10) empfängt und erste Datensätze (7) aufweist, die einen normalen Zustand der Struktur (1) anzeigen, und eine zweite Komponente (12), die die Umgebungsbedingungen (5) und die Sensordaten (10) empfängt und einen zweiten Datensatz (8) aufweist, umfasst,
wobei die erste Komponente (11) der Datenverarbeitungsvorrichtung (6) eine Abweichung eines Ist-Zustands der Struktur (1) von einem Sollzustand der Struktur (1) basierend auf den Sensordaten (10) des wenigstens einen Sensors (4) durch Vergleichen der Sensordaten (10) mit den ersten Datensätzen (7) erkennt,
wobei, falls ein Wert der Abweichung größer als ein voreingestellter Schwellwert ist, bestimmt wird, dass der gegenwärtige Ist-Zustand, der durch einen durch die Sensordaten (10) bestimmten Datensatz beschrieben wird, ein anormaler Zustand (16) ist, und bestimmt (9) wird, mithilfe der Datenverarbeitungsvorrichtung (6), ob ein kritischer Zustand (14) der Struktur (1) vorhanden ist, der Grund zur Annahme gibt, dass Schäden auftreten, wobei,
falls der anormale Zustand (16) zur Bestimmung, ob ein kritischer Zustand (14) vorhanden ist, bestimmt wird, die zweite Komponente (12) den zweiten Datensatz (8) unter Einbeziehung virtueller Sensordaten auf Basis einer Simulation erzeugt und wenigstens einen Teil des zweiten Datensatzes (8) einer Risikobewertungseinheit (9) zuführt, die eine Risikobewertung durchführt, wobei,
die Risikobewertungseinheit (9), falls sie den Ist-Zustand, der zuvor durch die erste Komponente (11) als ein anormaler Zustand (16) bestimmt wurde, als kritischen Zustand (14) einstuft, eine Warnmeldung (15) ausgibt; und
falls die Risikobewertungseinheit (9) den Ist-Zustand, der zuvor durch die erste Komponente (11) als ein anormaler Zustand (16) bestimmt wurde, als normalen Zustand (13) einstuft, der Bestand an ersten Datensätzen (7) der ersten Komponente (11) um den Datensatz erweitert wird, der diesem normalen Zustand (13) entspricht.

2. Verfahren gemäß Anspruch 1, **dadurch gekennzeichnet, dass** im Fall einer Überschreitung des voreingestellten Schwellwerts um einen ersten Betrag der Ist-Zustand zuerst durch die erste Komponente (11) als anormaler Zustand (16) eingestuft wird, wobei dieser Ist-Zustand durch die zweite Komponente (12) als ein normaler Zustand (13) bewertet wird, und dann ein Datensatz, der diesen Ist-Zustand beschreibt, der ersten Komponente (11) zugeführt wird, um einen Bestand an Datensätzen zu erweitern, die die normalen Zustände (13) beschreiben.

3. Verfahren gemäß einem der Ansprüche 1 bis 2, **dadurch gekennzeichnet, dass** im Fall einer Überschreitung des voreingestellten Schwellwerts um einen zweiten Betrag der Ist-Zustand durch die erste Komponente als anormaler Zustand (16) eingestuft wird, wobei dieser Ist-Zustand durch die zweite Komponente (12) als ein kritischer Zustand (14) bewertet wird.

4. Verfahren gemäß einem der Ansprüche 1 bis 5, **dadurch gekennzeichnet, dass** der durch die zweite Komponente (12) identifizierte kritische Zustand (14) wenigstens einer Art von Schaden der Struktur (1) zugeordnet wird und ein Datensatz, der die wenigstens eine Art von Schaden beschreibt, der ersten Komponente (11) zugeführt wird.

5. Verfahren gemäß Anspruch 4, **dadurch gekennzeichnet, dass** die erste Komponente (11) Wahrscheinlichkeiten (21) für das Auftreten der wenigstens einen Art von Schaden bestimmt und eine entsprechende Warnmeldung (15) ausgibt.

6. Verfahren gemäß einem der Ansprüche 1 bis 7, **dadurch gekennzeichnet, dass** ein System künstlicher Intelligenz als erste Komponente (11) verwendet wird und ein System zum Bestimmen von Verformungen und/oder Kräften und/oder mechanischen Belastungen der Struktur (1) als zweite Komponente (12) verwendet wird.

7. Verfahren gemäß einem der Ansprüche 1 bis 6, **dadurch gekennzeichnet, dass** weitere Datensätze (22), die den Zustand der Struktur (1) betreffen, der Datenverarbeitungsvorrichtung (6) über eine Schnittstelle (20) zugeführt werden.

8. Vorrichtung zur Überwachung einer Struktur (1), durch die ein erstes Medium (2) von einem zweiten Medium (3) isoliert werden kann, wobei durch das erste Medium (2) ein höherer Druck auf die Struktur (1) ausgeübt wird als durch das zweite Medium (3), aufweisend:
wenigstens einen Sensor (4), durch den wenigstens eine physikalische Variable, die diese Struktur (1) betrifft und von Umgebungsbedingungen abhängt, erfasst wird, wobei der Sensor (4) Sensordaten (10) erzeugt, die an eine Datenverarbeitungsvorrichtung (6) übermittelt werden, wobei die Datenverarbeitungsvorrichtung (6) eine erste Komponente (11), die die Sensordaten (10) empfängt und erste Datensätze (7) aufweist, die einen normalen Zustand der Struktur (1) anzeigen, und eine zweite Komponente (12), die die Umgebungsbedingungen (5) und die Sensordaten (10) empfängt und einen zweiten Datensatz (8) aufweist, umfasst,
wobei die erste Komponente (11) der Datenverarbeitungsvorrichtung (6) eine Abweichung eines Ist-Zustands der Struktur (1) von einem Sollzustand der Struktur (1) basierend auf den Sensordaten (10) des wenigstens einen Sensors (4) durch Vergleichen der Sensordaten (10) mit den ersten Datensätzen (7) erkennt,
wobei, falls ein Wert der Abweichung größer als ein voreinstellbarer Schwellwert ist, bestimmt wird, dass der gegenwärtige Ist-Zustand, der durch einen durch die Sensordaten (10) bestimmten Datensatz beschrieben wird, ein anormaler Zustand (16) ist, und bestimmt (9) wird, mithilfe der Datenverarbeitungsvorrichtung (6), ob ein kritischer Zustand (14) der Struktur (1) vorhanden ist, der Grund zur Annahme gibt, dass Schäden auftreten, wobei
die erste Komponente (11) der Datenverarbeitungsvorrichtung (6) mit der zweiten Komponente (12) der Datenverarbeitungsvorrichtung (6) über eine Kommunikationsverbindung gekoppelt ist, die zum Senden von Daten ausgelegt ist,
falls der anormale Zustand (16) durch die erste Komponente (11) zur Bestimmung, ob ein kritischer Zustand (14) vorhanden ist, bestimmt wird, die zweite Komponente (12) den zweiten Datensatz (8) unter Einbeziehung virtueller Sensordaten auf Basis einer Simulation erzeugt und wenigstens einen Teil des zweiten Datensatzes (8) einer Risikobewertungseinheit (9) zuführt, die eine Risikobewertung durchführt, wobei,
die Risikobewertungseinheit (9), falls sie den Ist-Zustand, der zuvor durch die erste Komponente (11) als ein anormaler Zustand (16) bestimmt wurde, als kritischen Zustand (14) einstuft, eine Warnmeldung (15) ausgibt; und
falls die Risikobewertungseinheit (9) den Ist-Zustand, der zuvor durch die erste Komponente (11) als ein anormaler Zustand (16) bestimmt wurde, als normalen Zustand (13) einstuft, der Bestand an ersten Datensätzen (7) der ersten Komponente (11) um den Datensatz erweitert wird, der diesem normalen Zustand (13) entspricht.

## Revendications

1. Procédé de surveillance d'une structure (1) isolant un premier milieu (2) d'un second milieu (3),
où le premier milieu (2) exerce une pression plus élevée sur la structure (1) que le second milieu (3),
où au moins un capteur (4) acquiert au moins une variable physique relative à cette structure (1) et, en fonction de conditions environnementales (5), génère des données de capteur (10), et
où l'au moins un capteur (4) communique les données de capteur (10) à un dispositif informatique (6), où le dispositif informatique (6) comprend un premier composant (11) recevant les données de capteur (10) et ayant des premiers ensembles de données (7) indiquant un état normal de la structure (1) et un second composant (12) recevant les conditions environnementales (5) et les données de capteur (10) et ayant un second ensemble de données (8),
où le premier composant (11) du dispositif informatique (6) détecte une déviation d'un état réel de la structure (1) par rapport à un état cible de la structure (1) sur la base des données de capteur (10) de l'au moins un capteur (4) en comparant les données de capteur (10) aux premiers ensembles de données (7),
où, si une valeur de la déviation est supérieure à une valeur seuil prédéfinie, l'état réel actuel décrit par un ensemble de données déterminé par les données de capteur (10) est déterminé comme étant un état anormal (16) et il est déterminé (9) au moyen du dispositif informatique (6) s'il existe un état critique (14) de la structure (1) qui permet de s'attendre à l'apparition de dommages, où
si l'état anormal (16) est déterminé, pour déterminer si un état critique (14) existe, le second composant (12) génère le second ensemble de données (8) comprenant des données de capteur virtuelles sur la base d'une simulation, et fournit au moins une partie du second ensemble de données (8) à une unité d'évaluation des risques (9) qui procède à une évaluation des risques, où
si l'unité d'évaluation des risques (9) classe l'état réel précédemment déterminé comme étant un état anormal (16) par le premier composant (11) comme étant un état critique (14), elle délivre en sortie un message d'avertissement (15) ; et
si l'unité d'évaluation des risques (9) classe l'état réel précédemment déterminé comme étant un état anormal (16) par le premier composant (11) comme étant un état normal (13), le stock de premiers ensembles de données (7) du premier composant (11) est étendu par l'ensemble de données correspondant à cet état normal (13).

2. Procédé selon la revendication 1, **caractérisé en ce qu'**en cas de dépassement de la valeur seuil prédéfinie d'une première quantité, le premier composant (11) classe tout d'abord l'état réel comme étant un état anormal (16), où cet état réel est évalué comme état normal (13) par le second composant (12), puis une base données décrivant cet état réel est fournie au premier composant (11) pour étendre un stock d'ensembles de données décrivant les états normaux (13).

3. Procédé selon l'une quelconque des revendications 1 à 2, **caractérisé en ce qu'**en cas de dépassement de la valeur seuil prédéfinie d'une seconde quantité, l'état réel est classé comme état anormal (16) par le premier composant (11), où cet état réel est évalué comme état critique (14) par le second composant (12).

4. Procédé selon l'une quelconque des revendications 1 à 5, **caractérisé en ce que** l'état critique (14) identifié par le second composant (12) est associé à au moins un type de dommage de la structure (1) et un ensemble de données décrivant l'au moins un type de dommage est fourni au premier composant (11).

5. Procédé selon la revendication 4, **caractérisé en ce que** le premier composant (11) détermine des probabilités (21) pour l'occurrence de l'au moins un type de dommage et délivre en sortie un message d'avertissement correspondant (15).

6. Procédé selon l'une quelconque des revendications 1 à 7, **caractérisé en ce qu'**un système d'intelligence artificielle est employé comme premier composant (11) et un système pour déterminer des déformations et/ou des forces et/ou des contraintes mécaniques de la structure (1) est employé comme second composant (12).

7. Procédé selon l'une quelconque des revendications 1 à 6, **caractérisé en ce que** d'autres ensembles de données (22) relatifs à l'état de la structure (1) sont fournis au dispositif informatique (6) par l'intermédiaire d'une interface (20).

8. Dispositif de surveillance pour une structure (1), par lequel un premier milieu (2) peut être isolé d'un second milieu (3), où, une pression plus élevée est exercée sur la structure (1) au moyen du premier milieu (2) qu'au moyen du second milieu (3), comprenant
au moins un capteur (4), par lequel au moins une variable physique relative à cette structure (1) et dépendant de conditions environnementales est acquise, le capteur (4) générant des données de capteur (10) communiquées à un dispositif informatique (11) recevant les données de capteur (10) et ayant des premiers ensembles de données (7) indiquant un état normal de la structure (1) et un second composant (12) recevant les conditions environnementales (5) et les données de capteur (10) et ayant un second ensemble de données (8),
où le premier composant (11) du dispositif informatique (6) détecte une déviation d'un état réel de la structure (1) par rapport à un état cible de la structure (1) sur la base des données de capteur (10) de l'au moins un capteur (4) en comparant les données de capteur (10) aux premiers ensembles de données (7),
où, si une valeur de la déviation est supérieure à une valeur seuil pouvant être prédéfinie, l'état réel actuel décrit par un ensemble de données déterminé par les données de capteur (10) est déterminé comme étant un état anormal (16) et il est déterminé (9) au moyen du dispositif informatique (6) s'il existe un état critique (14) de la structure (1) qui permet de s'attendre à l'apparition de dommages, où
le premier composant (11) du dispositif informatique (6) est couplé au second composant (12) du dispositif informatique (6) par l'intermédiaire d'une liaison de communication adaptée pour transmettre des données,
si l'état anormal (16) est déterminé par le premier composant (11), pour déterminer si un état critique (14) existe, le second composant (12) génère le second ensemble de données (8) comprenant des données de capteur virtuelles sur la base d'une simulation, et fournit au moins une partie du second ensemble de données (8) à une unité d'évaluation des risques (9) qui procède à une évaluation des risques, où
si l'unité d'évaluation des risques (9) classe l'état réel précédemment déterminé comme étant un état anormal (16) par le premier composant (11) comme étant un état critique (14), elle délivre en sortie un message d'avertissement (15) ; et
si l'unité d'évaluation des risques (9) classe l'état réel précédemment déterminé comme étant un état anormal (16) par le premier composant (11) comme étant un état normal (13), le stock de premiers ensembles de données (7) du premier composant (11) est étendu par l'ensemble de données correspondant à cet état normal (13).
